# EUROPEAN PATENT APPLICATION

(11) **EP 4 641 059 A1**
(43) Date of publication of application: **29.10.2025**
(21) Application number: 25171112.3
(22) Date of filing: 16.04.2025
(51) Int. Cl.: F16K 15/02, B05B 1/00, B65D 88/54, B65G 19/08, B65G 47/18, F16K 15/14, B65D 88/70, F16K 1/44, F16K 11/10

(54) **FIRING VALVE**

(30) Priority: 22.04.2024 IT 202400009163
(71) Applicant: Barra Project International S.r.l., 24027 Nembro (BG) (IT)
(72) Inventor: MIGLIORATI, Genio Fedele, 24124 BERGAMO (BG) (IT)
(74) Representative: Gatti, Enrico

(57) **Abstract**

A firing valve for a storage structure (101) comprising a valve body (2) defining an inlet conduit (3) to allow the inflow of gas into said valve body, a firing conduit (5) provided with an outlet port (6) to allow the outflow of said gas, and a storage conduit (7) configured to be connected to a storage tank (S); connection means associated with said inlet conduit and configured to connect, in a fluid dynamic manner, said inlet conduit to an aeriform source; coupling means configured to fix said valve body to said storage structure; a main plug (9) mounted on said valve body interposed between said conduits and being movable between a storage configuration, in which it places said inlet conduit in fluid communication with said storage conduit, and a firing configuration in which it places said storage conduit in fluid communication with said firing conduit; and an additional plug (10) mounted on said valve body at said outlet port and being movable between an open configuration, in which it opens said outlet port to allow the outflow of said gas, and a closed configuration, in which it closes said outlet port to prevent material from entering said valve body.

## Description

The present invention refers to a firing valve, and in particular to a firing valve suitable to be associated with a storage structure for the rapid discharge of a gas in order to generate a pressure wave.

It is known that granular and pulverulent materials delivered from hoppers are used in the preparation of cements or agglomerates of various types. Granular materials are also used in many other cases in the art, for example in silos or in load cells.

These materials often tend to become compacted and create solid clumps that obstruct or even prevent the outflow of material.

Generally, these solid clumps must be broken up and the material of which they are formed must be fluidified using powerful jets of air or of other gases with a technique known as "firing".

This technique introduces, almost instantaneously, a large amount of compressed gas at high pressures in the vicinity of these solid clumps, producing shock waves that disintegrate them.

The amount of gas introduced must be such as to completely disperse its kinetic energy into the material present in the silos or in the hopper.

Firing valves allow a certain amount of high pressure air to be injected instantaneously.

Several patent applications by the same Applicant are known, in which prior art firing valves are described, such as BG2001A000037 and BG2005A000019.

In view of the environmental condition in which they normally operate, these valves require continuous improvements, capable of increasingly improving their efficiency, of reducing wear and the possibility of faults.

Added to this is the fact that prior art valves produce a shock wave that is concentrated in a simple discharge pipe that tends to create a hole inside the material, reducing the effect of fluidification.

The object of the present invention is to provide a firing valve having improved efficiency.

A further object of the present invention is to provide a firing valve that is less susceptible to faults and wear than prior art valves.

Another object is to provide a firing valve in which this problem is solved through a simple and effective solution.

In accordance with the present invention, these and other objects are achieved by a firing valve in accordance with claim 1.

These objects are also achieved by a system for activation and fluidification of bulk materials in accordance with claim 10.

Further features of the invention are described in the dependent claims.

The features and the advantages of the present invention will be apparent from the following detailed description of a practical embodiment thereof, illustrated by way of non-limiting example in the accompanying drawings, wherein:
Figs. 1 and 2 show a section of two variants of the firing valve in accordance with the present invention;
Fig. 3 schematically shows further versions of the firing valve;
Fig. 4 schematically shows a system for activation and fluidification of bulk materials.

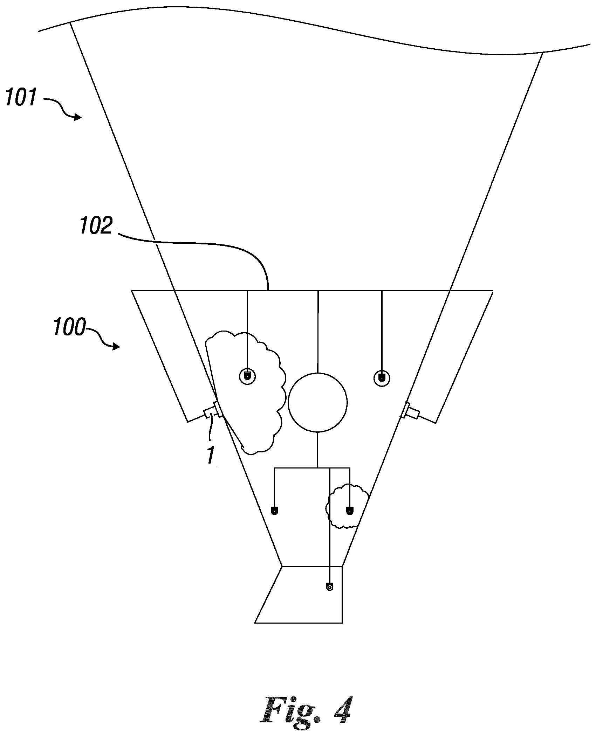

With reference to the accompanying figures, the number 1 illustrates a firing valve suitable to be associated with a storage structure in accordance with the present invention. The firing valve 1 is associable with a storage structure 101 of bulk materials, such as silos, hoppers, load cells, and so forth. Fig. 4 illustrates an example in which a plurality of valves 1 are mounted on a storage structure 101.

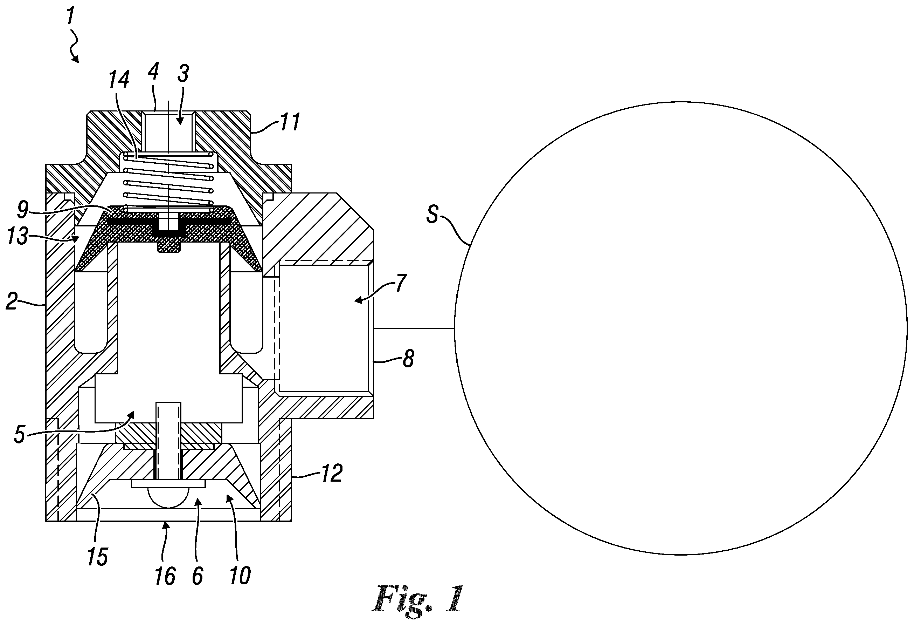

The firing valve 1 comprises a valve body 2 defining an inlet conduit 3 suitable to allow inflow of a gas into the valve body 2, a firing conduit 5 provided with an outlet port 6 suitable to allow outflow of the gas from the valve body 2, and a storage conduit 7 configured to be connected to a storage tank S, schematically illustrated in Fig. 1.

It would also be possible for the storage conduit 7 and the inlet conduit 3 to coincide, either partly or wholly.

The gas used is preferably air supplied by an aeriform source. The aeriform source is preferably a compressed air generator/storage tank (compressor) connected to the inlet conduit 3. However, the use of other gases is not excluded.

The firing valve 1 comprises a main plug 9 mounted on the valve body 2 interposed between the conduits 3, 5, 7. The main plug 9 is movable between a storage configuration, in which it places the inlet conduit 3 in fluid communication with the storage conduit 7, and a firing configuration in which it places the storage conduit 7 in fluid communication with the firing conduit 5. Therefore, the main plug 9, in storage configuration, closes the firing conduit 5 thus directing the gas from the inlet conduit 3 to the storage conduit 7, filling the tank S with pressurised gas. Instead, in firing configuration, the main plug 9 frees the firing conduit 5, directing the gas from the storage conduit 7 to the firing conduit 5, so that the gas flows out of the outlet port 6 at high speed.

Advantageously, the firing valve 1 comprises an additional plug 10 mounted on the valve body 2 at the outlet port 6. The additional plug 10 is movable between an open configuration, in which it opens the outlet port 6 to allow the outflow of gas, and a closed configuration, in which it closes the outlet port 6 to prevent material from entering the valve body 2.

Usefully, in open configuration, the additional plug 10 is positioned in front of the outlet port 6, with at least one part of it spaced therefrom, to intercept the outflow of gas, scattering it and distributing the shock wave over a larger surface. This prevents the shock wave from creating a hole inside the material to be removed, reducing the effect of fluidification and increasing its efficacy.

The valve body 2 and the conduits 3, 5, 7 defined by them will now be described in detail.

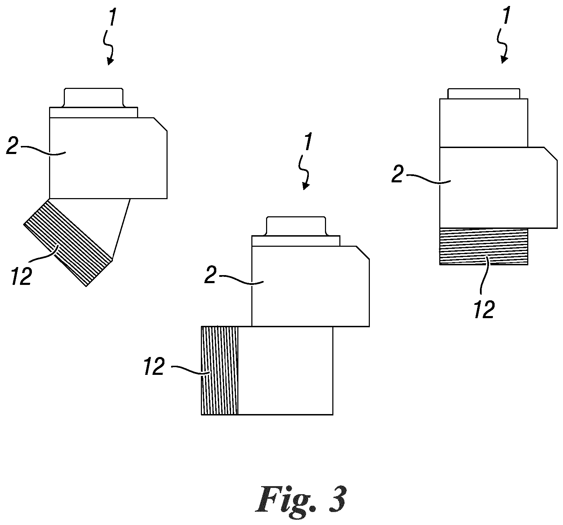

The valve body 2 extends between an inlet portion 11, in which the inlet conduit 3 is obtained, and an outlet portion 12, in which the outlet port 6 is obtained. The storage conduit 7 is instead obtained in a central portion of the valve body 2. The inlet 11 and outlet 12 portions are preferably opposite and aligned with each other. However, different configurations are possible, such as those illustrated in Fig. 3, in which the outlet portions are arranged in a different manner as a function of the desired direction of outflow of the gas.

Preferably, the valve body 2 is produced in a single piece.

The firing valve 1 is provided with coupling means configured to fix the firing valve 1 to the storage structure 101. The coupling means can be, for example, a flange 21, preferably obtained at the outlet portion 12.

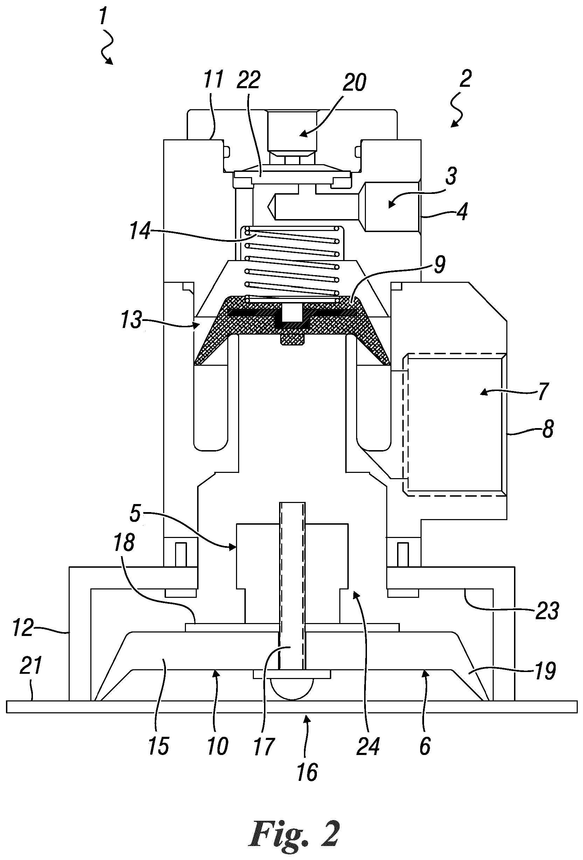

Figs. 1 and 2 illustrate a section of the valve body 2 in which the conduits 3, 5, 7 are visible.

The inlet conduit 3 comprises an inlet port 4 obtained on the inlet portion 11. The inlet conduit 3 extends from the inlet port 4 towards the inside of the valve body 2.

In the version of Fig. 1, the inlet port 4 is obtained at the upper end of the inlet portion 11; the inlet conduit 3 extends vertically and parallel to the firing conduit 5.

Instead, in the version of Fig. 2, as a control conduit 20 (which will be described in detail later in the description) is present, the inlet port 4 is obtained laterally, and the inlet conduit 3 extends horizontally.

The firing valve 1 comprises connection means associated with the inlet conduit 3 and configured to connect, in a fluid-dynamic manner, the inlet conduit 3 to the aeriform source. In particular, the connection means are arranged on the inlet portion 11. Preferably, the connection means comprise a flanged portion.

The storage conduit 7 comprises a storage port 8 for the passage of air towards/from the storage tank. The storage port 8 is obtained on a lateral portion of the valve body 2. The storage conduit 7 extends from the storage port 8 towards the inside of the valve body 2, preferably transverse to the inlet conduit 3, i.e., horizontally.

The storage port 8 is configured to be connected to a storage tank S. For this reason, association means are present, configured to connect, in a fluid-dynamic manner, the storage port 8 to a tank S. The association means are, for example, a flanged portion arranged at the storage port 8.

Finally, the firing conduit 5 extends from the outlet port 6 towards the inside of the valve body 2.

The outlet port 6, and consequently the outlet portion 12 of the valve body 2, can have different widths depending on use: the choice depends mainly on the type of material stored.

Fig. 1 illustrates an outlet port 6 having a width between 12 mm and 38 mm. In this version, the outlet portion 12 has the same width as the rest of the valve body 2.

Instead, in Fig. 2 the outlet port 6 has a width greater than 50 mm. The size can vary according to use, and can, for example, be 102 mm, 152 mm, 203 mm and so forth. In this version, the outlet portion 12 has a greater width than the rest of the valve body 2.

In one version, the outlet portion 12 is removable from the valve body 2, so that it can be changed according to use with another outlet portion 12 having a different shape. In these versions, the connection between the valve body 2 and the outlet portion 12 is preferably obtained by means of threads 23 that allow them to be screwed together. However, it would also be possible to use other connection means, such as screws, bolts and so forth.

As is visible from the section of Fig. 1, the valve body 2 defines a chamber 13 that places the conduits 3, 5, 7 in fluid communication. In practice, each conduit 3, 5, 7 leads into the chamber 13 through a respective inlet.

The valve body 2 has a substantially cylindrical structure, defining a substantially annular chamber 13.

The firing conduit 5 extends for a section inside the chamber 13, and hence the latter surrounds part of the firing conduit 5. The inlet of the firing conduit 5 is thus located inside the chamber 13.

The inlet of the storage conduit 7 is instead obtained on a wall delimiting the chamber 13. The inlet of the storage conduit 7 is obtained at the side of the firing conduit.

Finally, the inlet of the inlet conduit 3 is obtained above the inlet of the firing conduit 5.

Again with reference to Figs. 1 and 2, an example of embodiment of the main plug 9 will now be described in detail.

The main plug 9 substantially has the shape of a truncated cone, with a smaller base, destined to close the inlet of the inlet conduit 3, and a larger base whose centre is suitable to close the inlet of the firing conduit 5.

The main plug 9 as a whole then defines a central portion circumscribed by a lateral portion. This lateral portion is destined to control the passage of air towards/away from the storage conduit 7. This perimeter portion is inclined with respect to the central portion, preferably by around 45°, towards the storage conduit 7 and has a smaller thickness than the central portion in order to be able to flex. When the main plug 9 is in storage configuration, the perimeter portion is suitable to be flexed by the thrust of the inflowing air, so that this air can pass towards the storage conduit 7. Instead, in the firing configuration, the perimeter portion is resting against an abutment surface of the valve body 2 so that this surface prevents it from flexing, thereby directing the air towards the firing conduit 5.

The main plug 9 is positioned in the chamber 13 to direct the gas between the various conduits 3, 5, 7. In particular, the main plug 9 is interposed between the inlet of the inlet conduit 3 and the inlet of the firing conduit 5; its movement allows the inlets of the conduits 3, 5, 7 to be closed alternately.

In the preferred version, the main plug 9 is movable along a direction of activation, preferably parallel to the inlet conduit 3, between the storage configuration and the firing configuration. This movement is caused by cooperation between the pressure/vacuum pressure exerted by the gas in the conduits and a return spring 14 connected to the main plug 9: when the pressure of the inflowing gas is greater than a threshold value, the inflowing gas moves the main plug 9 into storage configuration; instead, when the pressure of the inflowing gas is less than or equal to the threshold value, the pressure exerted by the gas in the storage conduit, together with the return spring 14, exert on the main plug 9 a force such as to take it into firing configuration.

However, other embodiments of the main plug 9 are also possible, such as the use of a flexible membrane or the use of a motor or linear actuator for its movement.

The threshold pressure described above can be a pressure lower than or equal to zero (vacuum pressure), or a predefined positive value. This positive value can oscillate between 5% and 15% of the maximum pressure; for example, in the case of maximum pressure of 10 bar, a value of 8.5 bar, or 5 bar, or 3 bar can be used. In the first case, this pressure threshold can be reached by closing the generator/storage tank, or creating a vacuum pressure at the inlet conduit. In the second case, a control system can be provided connected to the valve 1, as illustrated in Fig. 2.

The control system of the version of Fig. 2 comprises a control membrane 22 connected to the inlet conduit 3 and movable as a result of a pressure exerted thereon between a closed position, in which it closes the inlet conduit 3, and an open position, in which it opens the inlet conduit 3.

The control membrane 22 comprises an edge that delimits a central portion. The edge has a smaller thickness than the central portion, in order to be able to flex. The edge is fixed to the valve body 2, while the central portion is free to move following flexing of the edge.

The control membrane 22 is mounted inside the inlet conduit 3.

The valve body 2 then defines a control conduit 20 obtained at the inlet portion 11 and communicating with the control membrane 22.

The control conduit 20 is configured to receive a pressurised gas, at a predefined pressure defining the threshold pressure, such as 0.5 bar, and convey it towards the control membrane 22 so that it acts thereon: when the pressure of the inflowing gas exceeds the threshold pressure, the control membrane 22 is moved by the inflowing gas to the open position; instead, when the pressure is below the threshold pressure, for example because inflowing gas is no longer supplied, the control pressure moves the control membrane 22 into the closed position. The movement of the main plug 9 thus depends on the threshold pressure set through the control system.

The additional plug 10, illustrated in a section thereof in Figs. 1 and 2, shall now be described in detail.

The additional plug 10 is configured to move between the closed and open configurations as a result of the pressure exerted thereon by the outflowing gas (i.e., the pressure exerted by the gas flowing in the firing conduit): when this pressure exceeds a given threshold value, the additional plug 10 is moved into the open configuration; instead, when the pressure is below the threshold value, the additional plug 10 returns to the closed configuration. For this reason, the additional plug 10 is activated simultaneously or in sequence to activation of the main plug.

The additional plug 10 comprises a flexible membrane 15. The membrane 15 has at least one surface having a shape substantially complementary to the outlet port 6, so that in closed configuration it can close it completely.

The membrane 15 is thus configured to flex, following the pressure exerted by the outflowing gas, to pass from the closed configuration to the open configuration. In particular, the membrane 15 is configured so that flexing takes place when the pressure of the outflowing gas exceeds a given threshold value. Instead, when the pressure of the outflowing gas is below the threshold value, the membrane 15 elastically returns into the closed configuration.

Therefore, the value of the threshold pressure depends on the flexibility of the membrane 15.

The membrane 15 is made of a material selected from rubber, polyurethane and silicone. The choice depends on the environmental operating conditions (e.g., high temperatures), and/or on the materials with which it interacts, for example, foodstuffs, inert, corrosive or abrasive materials, and so forth.

The membrane 15 comprises a perimeter portion 19, which surrounds a central portion, which is inclined with respect to the central portion, towards the outside of the outlet port 6. The perimeter portion 19 has a smaller thickness than the central portion, substantially giving the membrane the shape of a truncated cone, having a smaller base facing the outlet port 6, and a larger base facing outwards.

As can be seen from Fig. 2, the firing valve 1 comprises fixing means 16 suitable to fix a portion of the membrane 15 to the valve body 2 at the outlet port 6. The membrane 15 is free to flex in the parts that are not fixed. Preferably, the fixing means 16 comprise a screw 17 screwable to the valve body 2.

The valve body 2 comprises a supporting surface 18 at the outlet port 6. The membrane 15 is arranged resting against and fixed to this supporting surface 18. The membrane 15 is facing towards the outside of the valve with respect to the supporting surface 18.

The supporting surface 18 extends along the outlet port and has one or more holes 24 that allow the passage of gas. Preferably, the supporting surface 18 has a plurality of holes. The membrane 15 is thus placed in front of the outlet port, acting simultaneously as check valve and as shock wave distributor.

As can be seen from the figures, the membrane 15 is preferably arranged coaxially to the main plug, due to the fact that the outlet conduit is substantially linear.

The present invention also relates to a system 100 for activation and fluidification of bulk materials. The system 100 comprises the firing valve 1 described above. The firing valve 1 is installed on a storage structure 101 for bulk materials, such as silos, hoppers, load cells, and so forth. The system 100 also comprises a storage tank S operatively connected to the storage conduit 7. In particular, the storage tank S and the storage conduit 7 are connected to each other in a fluid dynamic manner, for example through conduits, to allow the passage of a gas between the storage conduit 7 and the tank S.

The system 100 further comprises an aeriform (preferably compressed aeriform) source, operatively connected to the inlet conduit 3 to supply the valve 1 with an inflowing gas. The aeriform source is preferably a compressed air generator/storage tank.

In one version, the system 100 comprises a plurality of firing valves 1 such as the one described above. These firing valves 1 are installed on a storage structure 101 of bulk materials, such as silos, hoppers, load cells, and so forth.

The system 100 further comprises a tubular air storage network 102 connected to each firing valve 1 and configured to connect each firing valve 1 to an aeriform, preferably compressed aeriform, source, for example compressed air.

The system thus conceived is susceptible to numerous modifications and variations, all falling within the scope of the inventive concept; moreover, all the details can be replaced with technically equivalent elements.

In practice, it has been shown how through the firing valve described above it is possible to prevent material from entering the valve body. Simultaneously, it is also possible to improve the efficiency of the valve, distributing the outflowing shock wave.

## Claims

1. A firing valve (1) suitable to be associated with a storage structure comprising:
a valve body (2) defining an inlet conduit (3) suitable to allow the inflow of gas into said valve body (2), a firing conduit (5) provided with an outlet port (6) suitable to allow the outflow of said gas, and a storage conduit (7) configured to be connected to a storage tank;
connection means associated with said inlet conduit (3) and configured to connect, in a fluid dynamic manner, said inlet conduit (3) to an aeriform source;
coupling means configured to fix said valve body (2) to said storage structure (101); and
a main plug (9) mounted on said valve body (2) interposed between said conduits (3, 5, 7), said main plug (9) being movable between a storage configuration, in which it places said inlet conduit (3) in fluid communication with said storage conduit (7), and a firing configuration in which it places said storage conduit (7) in fluid communication with said firing conduit (5);
**characterised by** comprising an additional plug (10) mounted on said valve body (2) at said outlet port (6), said additional plug (10) being movable between an open configuration, in which it opens said outlet port (6) to allow the outflow of said gas, and a closed configuration, in which it closes said outlet port (6) to prevent material from entering said valve body (2).

2. The firing valve (1) in accordance with claim 1, **characterised in that** said additional plug (10) is configured to move between said closed configuration and said open configuration as a result of the pressure exerted by said gas outflowing from said firing conduit (5).

3. The firing valve (1) in accordance with one of the preceding claims, **characterised in that** said additional plug (10) in open configuration is positioned in front of said outlet port (6) to intercept the flow of said gas outflowing therefrom.

4. The firing valve (1) in accordance with one of the preceding claims, **characterised in that** said additional plug (10) comprises a flexible membrane (15) configured to flex in order to pass between the closed configuration, in which it closes said outlet port (6), and the open configuration, in which it frees said outlet port (6).

5. The firing valve (1) in accordance with the preceding claim, **characterised in that** said membrane (15) is made of a material selected from rubber, polyurethane and silicone.

6. The firing valve (1) in accordance with one of the preceding claims, **characterised in that** said valve body (2) comprises a supporting surface (18) at said outlet port (6) on which said membrane (15) is arranged, resting thereon, said supporting surface (18) comprising one or more holes suitable to allow the passage of said gas.

7. The firing valve (1) in accordance with one of the preceding claims, **characterised in that** it comprises fixing means (16) suitable to fix a portion of said membrane (15) to said valve body (2) at said outlet port (6).

8. The firing valve (1) in accordance with one of the preceding claims, **characterised in that** said membrane (15) comprises an edge (19) folded with respect to a central portion thereof.

9. The firing valve (1) in accordance with one of the preceding claims, wherein said valve body (2) extends between an inlet portion (11), in which said inlet conduit (3) is obtained, and an outlet portion (12), in which said outlet port (6) is obtained,
**characterised in that** said outlet portion (12) is removable from said valve body (2).

10. A system (100) for activation and fluidification of bulk materials, comprising a firing valve (1) in accordance with one of the preceding claims, a storage tank (S) operatively connected to said storage conduit (7), and an aeriform source operatively connected to said inlet conduit (3) to supply said firing valve (1) with an inflowing gas.

11. The system (100) in accordance with claim 10, **characterised by** comprising a plurality of firing valves (1) in accordance with one of the preceding claims, a tubular air storage network (102) interposed between said storage tank (S) and each of said firing valves (1).
